# EUROPEAN PATENT SPECIFICATION

(11) **EP 3 105 085 B1**
(45) Date of publication and mention of the grant of the patent: **08.05.2019**
(21) Application number: 15709540.7
(22) Date of filing: 11.02.2015
(51) Int. Cl.: B60R 21/0132, G06Q 40/08

(54) **VEHICLE EVENT ASSESSMENT**
FAHRZEUGEREIGNISBEURTEILUNG
ÉVALUATION D'ÉVÉNEMENT LIÉ À UN VÉHICULE

(30) Priority: 12.02.2014 GB 201402441
(43) Date of publication of application: 21.12.2016
(73) Proprietor: Risk Telematics UK Limited, Walsall WS5 4AW (GB)
(72) Inventor: GILBERT, Wayne, Brockhurst Crescent Walsall WS5 4AW (GB); COWPER, Steve, Brockhurst Crescent Walsall WS5 4AW (GB)
(74) Representative: Potter Clarkson
(86) International application number: PCT/GB2015/050373
(87) International publication number: WO 2015/121639

(56) References cited:
- DE-A1-102008 045 586
- US-A1- 2008 042 410
- US-A1- 2008 243 327
- US-A1- 2008 255 722
- US-A1- 2013 317 702
- US-B1- 6 898 498

## Description

The disclosure relates to methods and apparatus for discriminating between types of motor vehicle events and in particular, although not exclusively, to automotive telematics apparatus for, firstly, analysing impact events, such as crash data in which the vehicle is involved with a collision, and secondly, non-impact events, such as braking events.

Automotive telematics apparatus are used for driver behaviour analysis in the insurance industry. Such analysis enables the risk associated with a particular driver to be determined on an objective basis based on actual driving, rather than a prediction based on demographic information, for example.

Many different factors associated with the behaviour of a vehicle influence the risk associated with the driver of the vehicle. The actions of the driver can lead to a number of different motor vehicle acceleration events. Motor vehicle acceleration events include acceleration due to application of the throttle of the vehicle, lateral acceleration caused by vehicle cornering and deceleration caused by vehicle braking. In a broader sense, acceleration events may also include both damaging impact events and non-damaging impact events, such as front, side or rear collisions, kerbing events and heavy vibration caused by adverse road surfaces such as potholes and speed humps.

Crash detection and accident recognition is used in automotive telematics in order to determine the cause of, and damage caused by, accidents in a reliable and cost effective manner. Crash detection technology can also provide data for forensic investigation and enable full 3D accident reconstruction.

A type of impact event can be determined by considering a magnitude of a sensor signal. A challenge faced by existing crash detection technology is the ability to differentiate between a 'real' crash and more mundane driving events, such as hitting a pothole, which can generate sensor readings of a similar magnitude. Such a capability is required in order to provide an accurate determination of a type of impact event.

The use of vibration measurements, in addition to accelerometer measurements can assist in the determination of a type of impact event. However, such a solution involves additional hardware costs compared to a solution in which only a single type of sensor is used. DE102008045586 (A1) relates to a system that has collision sensors for measuring acceleration values of a motor vehicle for collision detection. A classifier generates an ignition signal with an uncertain message dependent on a characteristic signal formed by an output signal of one of the collision sensors. Another classifier generates another ignition signal with the uncertain message dependent on another characteristic signal formed by the output signals of the collision sensors. An airbag and a belt pretensioner are activatable by the ignition signal.

US2008/0255722 A1 discloses a system and method for evaluating driver behaviour.

The invention is defined by the claims. Also disclosed is an apparatus for discriminating between types of event on a motor vehicle, comprising:
a template library storing a plurality of different templates, each template corresponding to an event type; and
a pattern matching processor configured to (i) receive motion sensor data from one or more motion sensors on the motor vehicle, (ii) apply a wavelet transformation to the motion sensor data in order to identify features of transformed motion sensor data, (iii) compare one or more of the identified features of the transformed motion sensor data with templates in the template library and (iv) determine an event type based on the comparison.

The events may, in a first set of examples, be impact events. In a second set of examples the event may be a non-impact event, such as a braking or acceleration event.

Also disclosed is an apparatus for discriminating between types of impact event on a motor vehicle, comprising:
a pattern matching processor configured to receive motion sensor data from one or more motion sensors on the motor vehicle;
a template library storing a plurality of different templates, each template corresponding to an impact type;
a pattern matching processor configured to compare the motion sensor data with templates in the template library and determine an impact type based on the comparison. A plurality of features of the motion sensor data may be compared to the templates in order to determine a degree of correlation between the received motion sensor data and a number of types of event, which may be an impact event. By applying a pattern matching methodology, the confidence in event type matching can be improved compared to an apparatus in which a magnitude of a signal is simply compared to a threshold value. In addition, the pattern matching methodology can provide an acceptable accuracy of event classification, which may include impact event classification, based on only a single kind of sensor data, such as only accelerometer data or only motion sensor data, for example. As such, the requirement for a second type of sensor is removed and so a more compact, cheaper system with less parts may be used.

A classification of vehicle behaviour can be based on the types of event that the vehicle experiences in order to provide a more precise estimate of the risk associated with a particular driver.

The types of events may be types of acceleration event. A deceleration event may be a type of acceleration event. A braking event may be a type of acceleration event. The templates in the template library may each be associated with a type of braking event. The type of braking style employed by a driver, or the frequency of the application of a particular type of braking can indicate the degree of risk that a driver engages in whilst driving.

One or more of the templates in the template library may be associated with a swerving motion of a vehicle. One or more of the templates in the template library may be associated with a vehicle travelling over a speed bump at a predetermined, or excessive, speed. The one or more of the templates may relate to vehicle behaviour that increases the risk of an incident, such as a collision or impact.

The apparatus may comprise the one or more motion sensors. The one or more motion sensors may comprise an accelerometer. The accelerometer may comprise a one-, two- or three dimensional accelerometer. The accelerometer may be configured to be mounted in the vehicle with an axis of acceleration normal to the ground. The one or more motion sensors may comprise a vibration sensor. The one or more motion sensors may comprise a sensor of an acceleration, or throttle, pedal and/or a sensor of a brake pedal of the vehicle. The one or more motion sensors may be integral with the vehicle.

The motion sensor data may be associated with a plurality of events. The events may have occurred at different times. The pattern matching processor may be configured to compare the motion sensor data with templates in the template library and determine an event type associated with each of the plurality of events based on the comparisons.

The pattern matching processor may be configured to classify a type of vehicle behaviour based on a number of determinations of acceleration event types. The number may include zero, one or more, or a plurality of determinations. The classification may occur over a predefined period, such as a day or an hour, or over one or more driving sessions. The classification may be based on the number of occurrences of each type of acceleration event. One or more of the templates in the template library may be associated with a risk weighting for the corresponding event type. The classification may be based on the risk weighting of each type of acceleration event.

The pattern matching processor may be configured to classify a type of vehicle behaviour based on a number of determinations of acceleration event types. The classification may be based on the occurrence of each type of acceleration event. One or more of the templates in the template library may be associated with a risk weighting for the corresponding event type. The classification may be based on the risk weighting of each type of acceleration event. One or more of the templates in the template library may each be associated with a type of braking event.

The pattern matching processor may be configured to apply a transformation to the motion sensor data in order to identify features of transformed motion sensor data. The pattern matching processor may be configured to compare one or more of the identified features with templates in the template library. The pattern matching processor may be configured to apply a wavelet transformation to the motion sensor data in order to provide the transformed motion sensor data. A wavelet transformation has been found to be a useful type of transformation to apply because temporal information, as well as frequency information, is retained in the transformed signal. The wavelet transformation may be a continuous or discrete wavelet transformation.

The one or more identified features may be coefficients of the transformed motion sensor data. A plurality of coefficients associated with one or more templates may be provided in the template library. The pattern matching processor may be configured to compare each coefficient of the transformed motion sensor data with the one or more templates of a corresponding coefficient provided in the template library. The pattern matching processor may be configured to match a scale and translation value of each of the coefficients of the transformed motion sensor data with a scale and translation value of the one or more templates of the corresponding coefficient provided in the template library. The pattern matching processor may also be configured to match a power value of each of the coefficients of the transformed motion sensor data with a power value of the one or more templates of the corresponding coefficient provided in the template library.

Also disclosed is an automated method for discriminating between types of event on a motor vehicle, comprising:
receiving motion sensor data from one or more motion sensors on the motor vehicle;
retrieving a plurality of different templates from a template library, each template corresponding to an event type;
applying a transformation to the motion sensor data in order to identify features of transformed motion sensor data;
comparing one or more of the identified features of the transformed motion sensor data with the plurality of different templates; and
determining an event type based on the comparison.

Also disclosed is an automated method for discriminating between types of impact event on a motor vehicle, comprising:
receiving motion sensor data from one or more motion sensors on the motor vehicle;
retrieving a plurality of different templates from a template library, each template corresponding to an impact type;
comparing the motion sensor data with the plurality of different templates; and
determining an impact type based on the comparison.

Also disclosed is an automated method for generating a library of templates corresponding to different known types of motor vehicle event, comprising:
receiving motion sensor data representative of the different types of motor vehicle event;
applying a transformation to the motion sensor data in order to identify features of transformed motion sensor data;
for at least some of the different types of motor vehicle event, determining values of one or more indicative features, each value corresponding with a particular type of motor vehicle event;
providing the library of templates comprising the indicative features and an identifier of the particular type of motor vehicle event with which each value corresponds.

Also disclosed is an automated method for generating a library of templates corresponding to different known types of motor vehicle impact event, comprising:
receiving motion sensor data representative of the different types of motor vehicle impact event;
identifying features of the motion sensor data;
for at least some of the different types of motor vehicle impact event, determining values of one or more indicative features, each value corresponding with a particular type of motor vehicle impact event;
providing the library of templates comprising the indicative features and an identifier of the particular type of motor vehicle impact event with which each value corresponds.

The motion sensor data may comprise a plurality of examples of each different type of motor vehicle event, which may be impact events. Identifying features of the motion sensor data may comprise generating a matrix of coefficients using a discrete wavelet transformation. Each coefficient may have an element associated with one of the plurality of examples of each different type of motor vehicle event, which may include an impact event. Identifying features of the motion sensor data may comprise applying a continuous wavelet transformation to the motion sensor data.

Determining values of the one or more indicative features may comprise performing cluster analysis on the elements of each coefficient. Determining values of the one or more indicative features may comprise identifying one or more coefficients that provide a separate cluster for each different type of motor vehicle event, which may include an impact event. Each template may comprise a description of a cluster. Cluster analysis has been found to be a computationally efficient means of determining the one or more indicative features.

In a first set of examples, the events may be impact events. In a second set of examples, the events may be non-impact events. The type of event may be an acceleration event. The templates in the template library may each be associated with a type of braking event.

Also disclosed is a vehicle comprising any apparatus described above.

Also disclosed is a computer program configured to perform any method described above.

Embodiments of the invention and illustrative examples will now be described, by way of example, with reference to the following figures, in which:
Figure 1 illustrates an automated method for generating a library of templates corresponding to different known types of motor vehicle impact event;
Figure 2 illustrates an automated method for discriminating between types of impact event on a motor vehicle;
Figure 3 illustrates a block diagram representation of an apparatus for discriminating between types of impact event on a motor vehicle and additional associated sensors;
Figure 4a illustrates longitudinal accelerometer data for an impact event;
Figure 4b illustrates lateral accelerometer data for an impact event;
Figure 5a illustrates an impact event record containing sequentially combined longitudinal and lateral accelerometer data from figures 4a and 4b;
Figures 5b illustrates three-dimensional data for combining into a single event record;
Figures 6a to 6c illustrate impact records from three different types of impact event;
Figures 6d to 6f illustrate event records from three different types of non-impact event;
Figure 7 illustrates a table of motion sensor data points;
Figure 8 illustrates a table of coefficients of transformed motion sensor data;
Figure 9a illustrates an example of a coefficient that enables three different impact event types to be resolved;
Figure 9b illustrates an example of a coefficient that does not enable three different impact event types to be resolved;
Figure 10 illustrates a block diagram representation of a portion of a template library; and
Figure 11 illustrates a block diagram representation of transformed motion sensor data to be classified.

The present disclosure relates to using pattern matching to discriminate between a plurality of different types of motor vehicle events, including impact events and non-impact events. Non-impact events include acceleration events, such as braking.

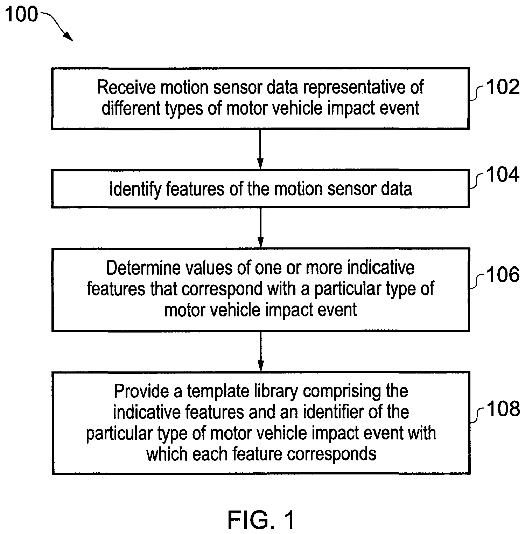

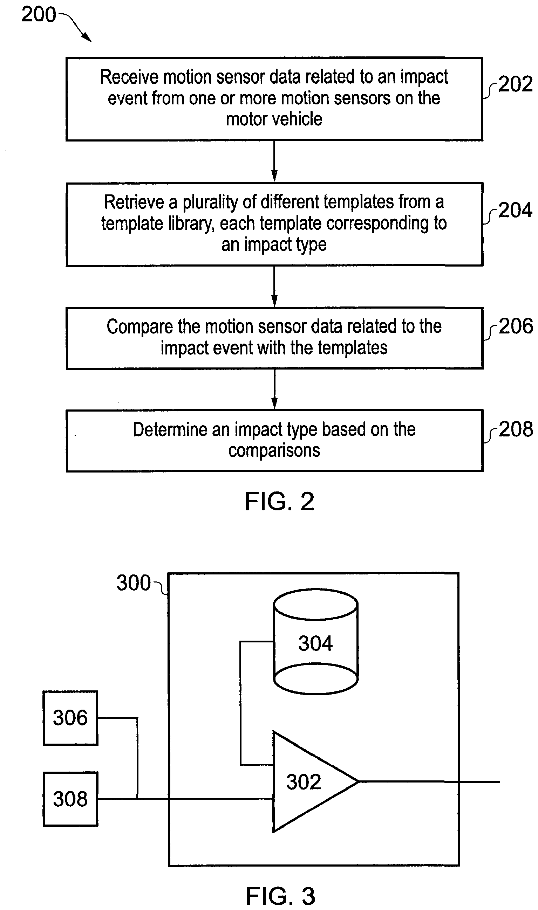

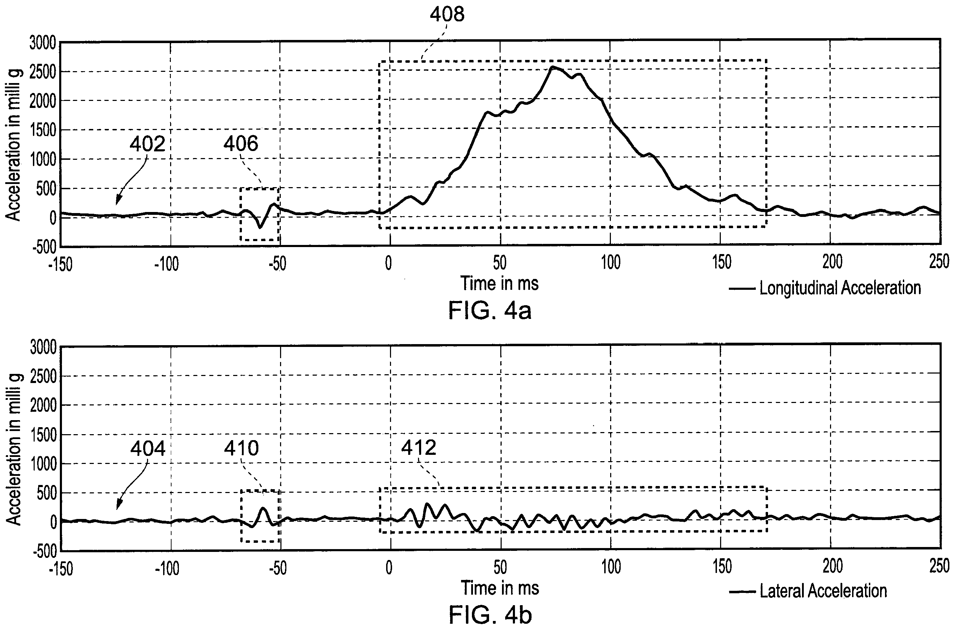

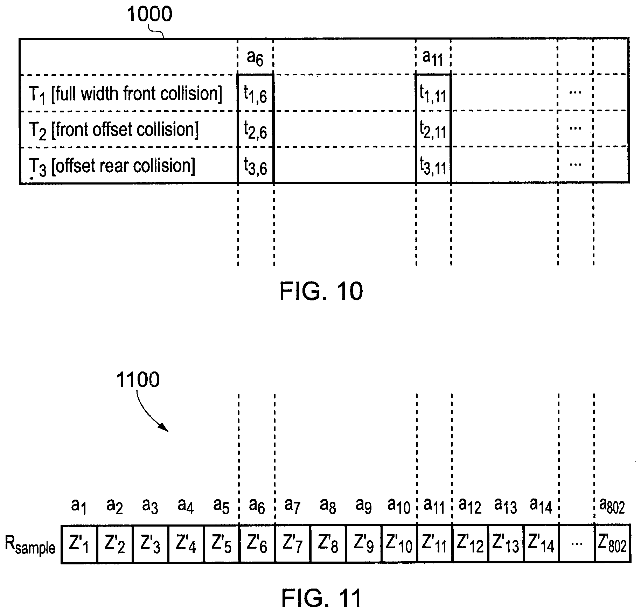

Figure 1 illustrates a series of steps of an automated method for generating a library of templates corresponding to different known types of motor vehicle event, which may be impact events. Once generated, the library can be used to categorise sensor data from subsequent impact events, as will be discussed with reference to the method of figure 2 and apparatus of figure 3. The method of figure 1 can be considered to illustrate a "learning mode", whereas the method of figure 2 illustrates a classification mode. An example according to the method of figure 1 is described in further detail with reference to figures 4 to 10. An example according to the method of figure 2 is described in further detail with reference to figures 10 and 11. In each of these examples, the method and apparatus are discussed in regard to the analysis of impact events. These systems and apparatus may also be used to classify non-impact events, such as acceleration/braking events.

As an initial step in the method 100 of figure 1, motion sensor data representative of different types of motor vehicle impact event are received at step 102. The motion sensor data can take the form of a digitised waveform, or waveforms. The motion sensor data may include accelerometer data or vibration meter data obtained from motion sensors situated on or inside a motor vehicle, such as a road vehicle, watercraft or aircraft. It is desirable to ensure that the motion sensors acquire the motion sensor data at a sufficient frequency to comply with the Nyquist limit of the waveform.

Unprocessed, or unfiltered, motion sensor data typically comprises real information, system noise, environmental noise, sampling errors and signal aliasing. Filtering can be applied to the motion sensor data to remove artefacts. A 4th order Butterworth filter has been found to be suitable to apply to raw motion sensor data for some applications. The Butterworth filter can be applied bi-directionally to remove phase errors (for example, see filter type CFC 60 featured in SAE J211: Instrumentation for Impact Test, Part 1, Electronic Instrumentation).

Motion sensor data from a particular impact event may be provided as an impact record. In order to train the system, a plurality of examples of each different type of motor vehicle impact event may be received to form a training set.

Once the training set of impact data has been received (step 102) and, optionally, processed, features of the motion sensor data can be identified at step 104. Identifying the features can be achieved using a variety of known signal processing techniques. Identifiable features for discriminating impact type may relate to variations in the waveform of the motion sensor data (in the time domain). For example, identifiable features for discriminating between different impact types may include peaks and troughs in waveform data. The identifiable features have a number of values, such as the duration of the impact event, magnitude, frequency, relative direction, and envelope size. A plurality of features may be considered in order for pattern matching to be applied, as opposed to a single comparison with a threshold level.

Alternatively, a transformation may be applied to the waveform of the motion sensor data in order to identify features for discriminating impact type. A wavelet transformation is applied according to the claimed invention. Alternatively, a Fourier transform may be applied to the received waveforms in order to determine frequency information. In this case, one or more frequency components from the transformed data may be identifiable features for discriminating impact type. A disadvantage of applying a Fourier transform to an entire motion sensor data record is that temporal information, which can be useful in categorising impact types, is lost. In order to address this problem, each dataset can be broken down into windowed periods of time and each window can be individually Fourier transformed. However, such a technique may require prior knowledge of the expected duration of each window for best results.

Applying a wavelet transformation to the waveform of the motion sensor data provides transformed motion sensor data that includes temporal information as well as information regarding the amplitude/power and frequency components of the motion sensor data. Where the waveform is provided as a digitised signal, a discrete wavelet transformation can be applied in order to generate a matrix of coefficients of sensor data corresponding to each of the motor vehicle impact event records. The coefficients relate to identified features of the motion sensor data. The matrix can be considered as a table of elements with columns of coefficients and rows of impact records. Each element of the matrix is therefore associated with both a particular coefficient and a particular impact event. Each coefficient is associated with a number of elements. Each impact record is also associated with a number of elements.

Alternatively, where the waveform is provided as a continuous signal, a continuous wavelet transformation may be applied to the waveform. The transformed waveform may be considered to provide the identified features of the motion sensor data in such an example.

Identifiable features that have a value that varies depending upon the type of impact event can be considered to be indicative features. For at least some of the different types of motor vehicle impact event, values of one or more indicative features that correspond with a particular type of motor vehicle impact event are determined at step 106.

Where wavelet transformation has been used to provide a matrix of coefficients of sensor data, cluster analysis can be performed on the matrix of coefficients in order to identify features that provide a separate cluster for each different type of motor vehicle impact event. Coefficients with elements that take distinguishable values depending on the impact type of impact to which the elements relate can be considered to be indicative features. In this way, the values of the one or more indicative features that are associated with a particular type of motor vehicle impact event can be determined.

The values of the one or more indicative features are provided, together with an identifier of the particular type (or, in some examples, types) of motor vehicle impact event with which each value corresponds, as a template library (at step 108). Each value of an indicative feature associated with one particular type of motor vehicle impact event can be considered to be a template for that particular type of motor vehicle impact.

The template library is stored for subsequent use. The library can be stored centrally and/or provided on a mobile device, such as an in-vehicle device, for subsequent classification of impact events.

Figure 2 illustrates an automated method 200 that may be used after an incident or event has occurred in order to discriminate between, or classify, different types of impact or non-impact event on a motor vehicle, using the template library. The monitoring of non-impact events during use of the vehicle enables a number of events to be monitored so that the behaviour of the vehicle can be classified. The method 200 is described in further detail below with regard to an impact event example.

The method 200 comprises the step of receiving incident motion sensor data from only one, or more than one, motion sensor on the motor vehicle (at step 202). The sensors are typically of the same kind as those used to produce the template library at step 102. The accelerometer data may be monitored continuously while the vehicle is in motion. Alternatively, accelerometer data may be monitored only when the acceleration along an axis is above a pre-set threshold, or when a predetermined geographical area is entered. For example, monitoring may be triggered in response to a positioning system (such as a satellite based positioning system such as the global positioning system, GPS) indicating that a pre-determined area has been entered. In this way, data may be actively monitored around accident or crime hotspots.

A plurality of different templates are retrieved from the template library at step 204. Each template corresponds to an impact type. The retrieval of the templates at step 204 can take place before, after or simultaneously with the receipt of motion sensor data at step 202.

Features of the incident motion sensor data are identified in a similar manner to that used in step 104 when generating the template library. The features may provide a quantitative measure of the one-, two-, or three-dimensional acceleration profile of a vehicle over a predetermined period of time. The features may encompass absolute or relative changes in acceleration along an axis, or a periodicity of an acceleration change, for example. The features of the incident motion sensor data are compared with each of the plurality of templates at step 206. An impact type is determined based on the outcome of the comparisons between the incident motion sensor data and each of the plurality of templates. The impact event type may be determined based on an identifier of the particular impact event type with which a template that corresponds best with the features of the incident motion sensor data is associated.

A number of attributed distinguish braking events form impact events. For example, impact events may occur over a time period of about 60 ms or 70 ms, in some examples, and typically less than 250 ms, irrespective of the type of impact. Pothole impacts may occur in a similar time frame to more serious impacts. Braking and acceleration events may have an acceleration in the range of 1 g to 1.3 g or 1.5 g. Impact events may have a maximum acceleration that is greater than 2 g. Braking events related to non-impact events may occur over a time period of greater than a 0.5 seconds or a second.

Non-impact events may not result in the vehicle coming to rest whereas a vehicle will typically stop after an impact event has occurred.

In the case where the method is used to classify non-impact events, the steps 202 to 208 of the method 200 may be repeated so that the types of event associated with a plurality of events are determined. For example, the motion sensor data may be associated with a plurality of different events that occur while the vehicle is being driven. The motion sensor data may be compared with templates in the template library in order to determine an event type associated with each of the plurality of events based on the comparisons.

The method may further comprise the step of classifying a type of vehicle behaviour based on a number of determinations of acceleration event types. For example, the method may comprise recording each time that a type of event occurs. Each type of event may be assigned a risk weighting, which can take a numeric value. Each template may be associated with a risk weighting for the corresponding event type. A statistical profile of the behaviour of the vehicle can be determined based on the occurrence of each type of acceleration event and the risk associated with each type of event. For example, cadence braking may be assigned a higher value than distracted braking, which in turn may have a substantially higher value than observant type braking. In this way, the behaviour of a driver of a vehicle over a driving session, or other period of time, can be reflected by an aggregate score. The statistical profile, or score, may be recorded for each driving session. Meta-data such as the time of day, identity of the vehicle driver or location of the vehicle may be associated with the statistical profile. Data concerning each session can be sent to a remote computer for storage or further analysis.

Figure 3 illustrates an apparatus 300 for discriminating between types of impact event on a motor vehicle using the method 200 of figure 2. The same, or a similar, apparatus 300 can also be used to generate the template library by performing the method 100 of figure 1. Although the example discussed below relates to impact event classification, the apparatus 100 may also be used to discriminate between types of non-impact event on a motor vehicle or generate the template library for non-impact events.

The apparatus may be provided by a server remote from the vehicle. Alternatively, the apparatus may be distributed between a local device, provided in a vehicle, and a server remote from the vehicle.

The apparatus 300 comprises a pattern matching processor 302 and a template library 304. The pattern matching processor 302 is configured to receive motion sensor data from one or more motion sensors 306, 308 on the motor vehicle. The motion sensors in this example include an accelerometer 306 and a vibration sensor 308. A one-, two- or three-dimension accelerometer may be used, depending on the application. The accelerometer may be a micro-electromechanical systems MEMS accelerometer. A one-dimensional accelerometer may be suitable for applications where the processing power of the pattern matching processor 302 is constrained. Alternatively, other types of sensors could be used, such as an inertial measurement unit (IMU). An IMU can be provided with one, two or three axis rotation data. The motion sensors 306, 308 are preferably integrated with the vehicle to reduce damping of measured movement of the vehicle. The apparatus 300 may also comprise the motion sensors 306, 308, for example, where the apparatus 300 is provided as a vehicle mounted device. Examples of the apparatus 300 may be implemented using only a single sensor and still provide sufficient data in order to classify a plurality of different types of event because of the techniques implemented by the pattern matching processor 302. Using only a single sensor, or only a single type of sensor, can result in a simplified apparatus 300.

Motion sensor data related to an impact event can be obtained by buffering motion sensor data obtained from the one or more motion sensors 306, 308 and then automatically capturing information from the buffer for a period surrounding when an impact event is observed. Alternatively, data can be continuously recorded for later analysis. As a further alternative, the apparatus 300 can be configured to continuously analyse blocks of motion sensor data obtained from one or more motion sensors 306, 308.

The template library 304 contains a plurality of different templates, each template corresponding to an impact type. The pattern matching processor 302 is configured to compare the motion sensor data with templates in the template library (at step 206) and determine an impact type based on the comparison (at step 208). The template library 304 is stored in a memory of the apparatus 300, which may be provided remote from the vehicle. However, in order for the pattern matching processor 302 to process the templates there is typically at least transitory storage of the template library 304 in the same apparatus in which the pattern matching processor 302 is housed.

The pattern matching process 302 and template library 304 may be used to compare non-impact event data instead of, or as well as, impact event data. The pattern matching processor 300 may be further configured to classify a type of vehicle behaviour based on a number of determinations of acceleration event types. Alternatively, the determinations of the accelerations event types may be sent to a remote computer and the remote computer may classify a type of vehicle behaviour based on a number of determinations of acceleration event types.

The apparatus 300 may comprise a power supply that is configured to receive power from the vehicle when in use such as from the vehicle battery. The received power supply may be 12 V or 24 V.

Pattern matching for the methods of figure 1 and 2 uses wavelet transformation methods. Wavelet transformations retain both frequency and location information from a data source. As such, the use of a wavelet transformation instead of a Fourier transformation can be advantageous because the wavelet transformation provides temporal resolution. The application of a discrete wavelet transformation method is described further with regard to figures 4 to 10.

Figures 4a and 4b illustrate longitudinal accelerometer data 402 and lateral accelerometer data 404 for a single impact event as a function of time. This accelerometer data is an example of motion sensor data that can be obtained from a 2D or 3D accelerometer. The longitudinal accelerometer data 402 provides a waveform with a first peak 406 and a second peak 408. The first peak 406 has a maximum amplitude of around -0.1 to -0.2 g.

The start of the second peak 408 follows the first peak by about 50 ms. The second peak 408 has a full width at half maxima of about 80 ms and a maximum amplitude of +2.5 g. The lateral accelerometer data 404 provides a waveform with a third peak 410 and a series of peaks 412. The third peak 410 occurs at a similar time as the first peak 406 and has a maximum amplitude of around 0.1 to 0.2 g. The series of peaks 412 occurs at a similar time to the second peak 408 and has a maximum amplitude of around 0.1 to 0.2 g.

In order to generate a template for the type, T, of impact event to which the motion sensor data relates, the longitudinal and lateral accelerometer data 402, 404 are combined into a single event record, R₁, which relates to that particular impact event. In general, an event record, Rᵢ, contains data from each sensor that recorded a particular impact event.

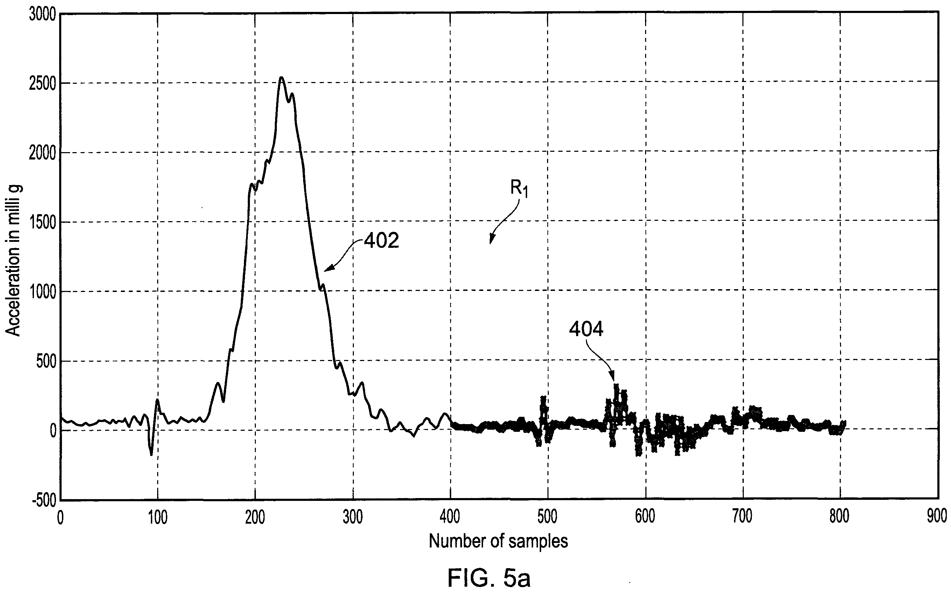

Figure 5a illustrates a sequentially combined impact event record R₁ comprising the longitudinal and lateral accelerometer data 402, 404 of figures 4a and 4b. The data is shown on axes of acceleration against sample number. The sample number is related to time (it is proportional to time in this example) within each of the longitudinal and lateral accelerometer data 402, 404 portions of the event record R₁.

In a similar way, in order to generate a template for a type of a non-impact acceleration event to which the motion sensor data relates, the x, y and z dimensions of three dimensional accelerometer data can be combined into a single acceleration event record which relates to that particular acceleration event. In general, an event record contains data from each sensor that recorded a particular acceleration event.

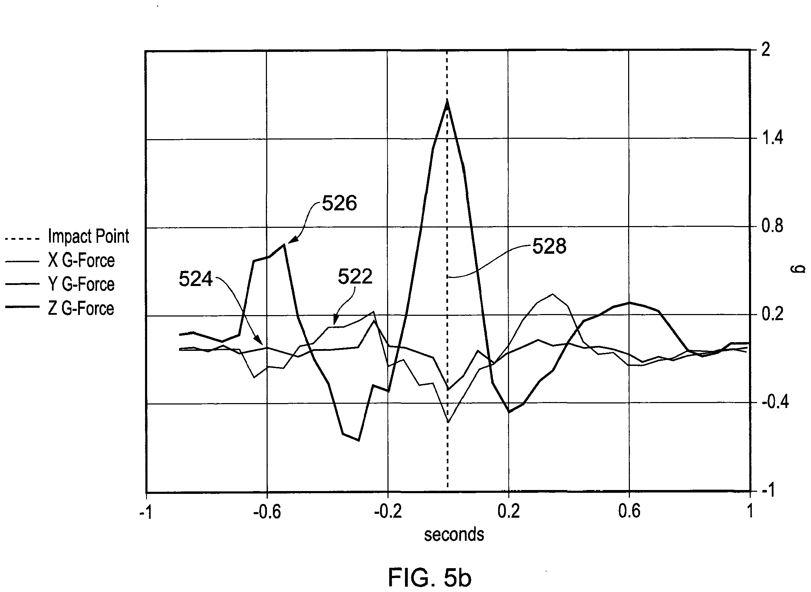

Figure 5b illustrates x, y and z dimensions of accelerometer data 522, 524, 526 for a single acceleration event as a function of time. The acceleration event relates to a vehicle going over a speed bump at an impact instant 528. A one-dimensional accelerometer may be provided in order to detect speed bump acceleration events. A one-dimensional (or higher dimension) accelerometer may be mounted in a vehicle with an axis of acceleration normal to the ground in order to obtain z-axis acceleration events.

Lateral acceleration occurs in a direction that is transverse, or normal to the axis of the vehicle. Additional behaviour, such as swerving which includes a lateral component, can be identified by analysis of two- or three-dimensional acceleration data.

Analysis of acceleration normal to the ground (z-axis acceleration) can be used to classify risky behaviour such as the vehicle driving over a speed bump or over a bridge or crest in a road (which may be associated with a loss of control) at an excessive speed at a relatively low temporal resolution. This accelerometer data in figure 5b is provided by a 3D accelerometer operating at 100 Hz, which is a similar resolution to some conventional accelerometers. A lower resolution of 10 or 20 Hz may also be used in some cases and still provide data sufficient for classifying non-impact events. By reducing the temporal resolution of the accelerometer or reducing the number of dimensions of accelerometer data, the power consumption of the accelerometer and data processing apparatus can be reduced. However, a higher rate may still provide more information that is useful in some applications. The example rate may be chosen to ensure that sufficient detail is resolvable without the undue introduction of artefacts.

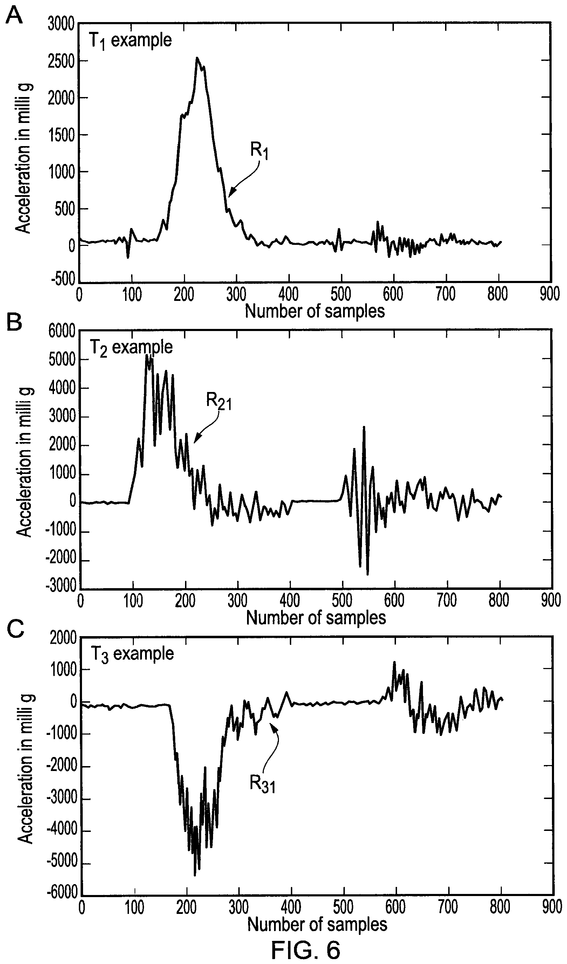

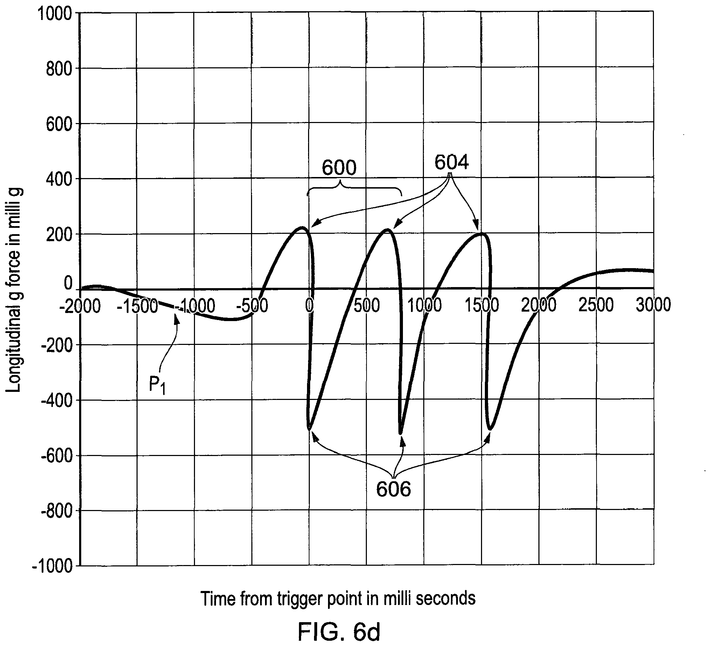

Many more specific types of behaviour, including braking behaviour, can be distinguished between by analysing a one-dimensional longitudinal acceleration profile (x-axis acceleration, in the direction of an axis of the vehicle), such as those illustrated in figures 6d to 6f.

Figures 6a to 6c relate to example event records (also known as impact records) for impact events (using the type of impact event sensor data discussed above in figure 5a) and figures 6d to 6f relate to example event records for non-impact events (using the type of non-impact event sensor data discussed above in figure 5b).

Figure 6a to 6c illustrate respective impact records R₁, R₂₁, R₃₁ from three different types T₁, T₂, T₃ of 'real life' impact event. As in figure 5, the data is shown on axes of acceleration against sample number. In this case, the type T of each impact is known so the data can be used to train a pattern matching processor, or other classifier.

For illustrative purposes, the impact record R₁ exemplifies a full width front collision (impact event type T₁). The impact record R₂₁ exemplifies a front offset collision (impact event type T₂). The impact record R₃₁ exemplifies an offset rear collision (impact event type T₃).

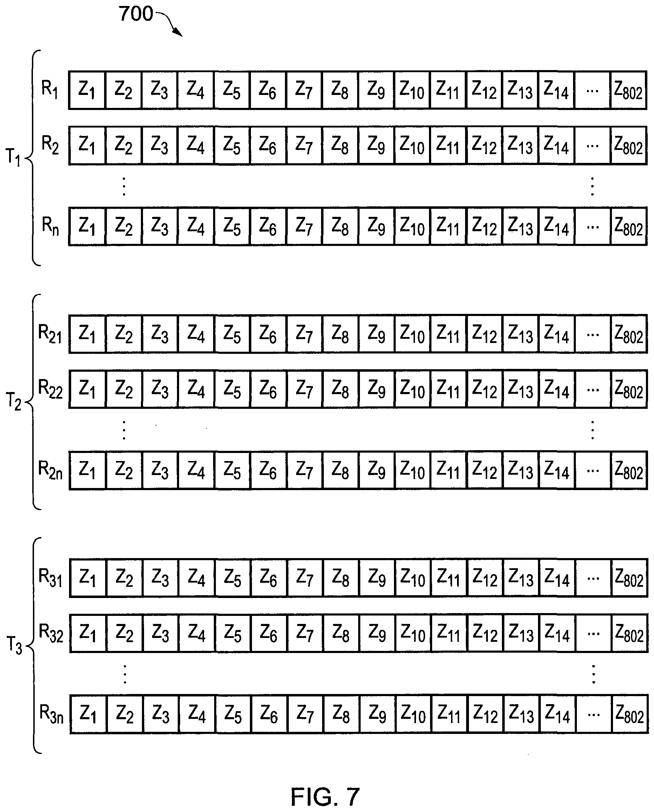

For each type T of impact event, a number of different records, Rᵢ, are obtained in order to produce a data structure, or matrix of data points, as discussed below with reference to figure 7.

Figures 6d to 6e illustrate respective event records P₁, P₂₁, P₃₁ from three different types of 'real life' acceleration events. Event records are referred to as 'P' records in figures 6d to 6f in order to avoid confusion with the impact records R discussed with regard to the impact classifying examples of figures 6a to 6c.

Drivers may use different types of braking to deal with different types of situations. For example, types of braking employed by drivers include 'cadence-type', 'distracted-type' and 'observant-type' braking.

For illustrative purposes, the event record P₁ in figure 6d exemplifies a cadence-type braking event (acceleration event type). 'Cadence-type' braking may occur when an impatient driver follows another vehicle too closely. The driver of the following vehicle generates a series of cycles 602 of positive acceleration 604 followed by braking 406 as they attempt to pressure the vehicle in front to pull over. The duration of each acceleration and braking cycle is about 0.75 seconds in this example.

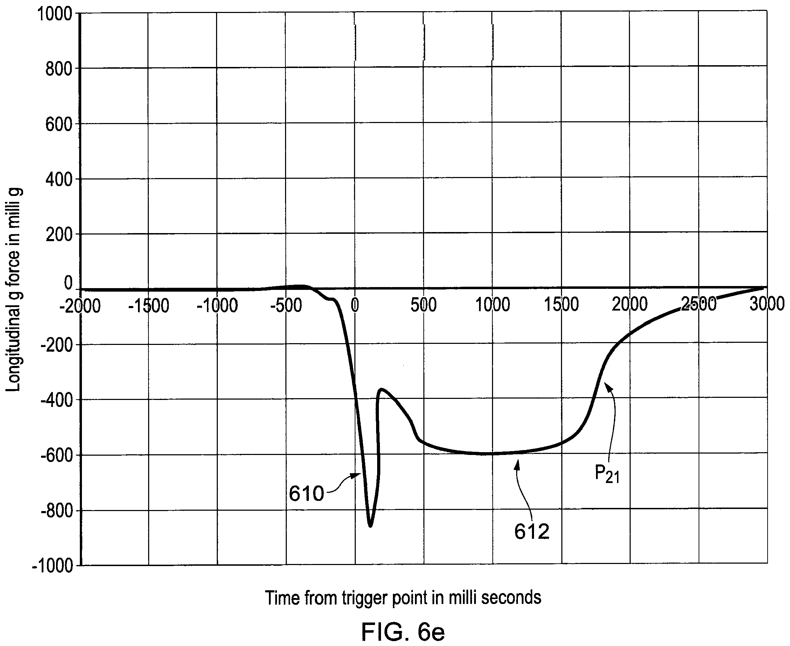

The event record P₂₁ in figure 6e exemplifies a distracted-type braking event (acceleration event type). 'Distracted-type' braking may occur when a driver is either paying insufficient attention to the road ahead or is actively distracted, by a mobile phone for example. 'Distracted-type' braking may be characterised by a panicked, sharp stabbing 610 on brakes possibly followed by a prolonged period 612 of braking. The duration of the stab 610 on the brakes is less than half a second and the prolonged period 612 of braking is around 2 seconds in duration in this example

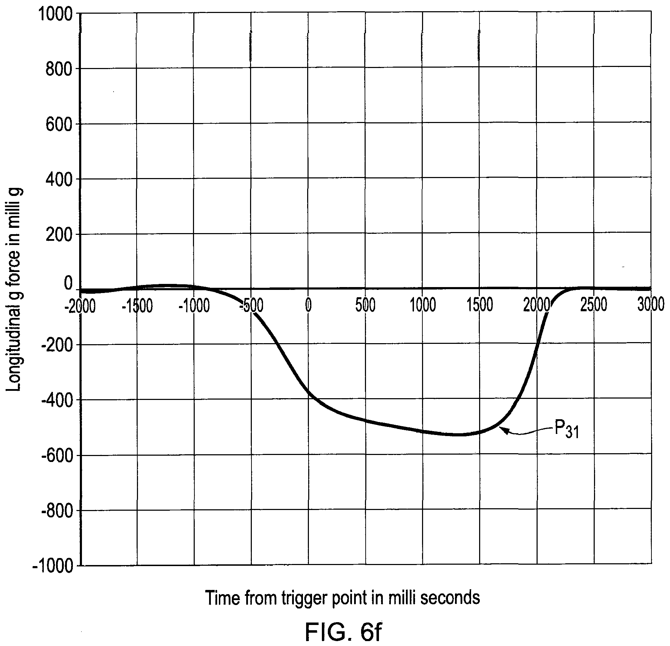

The event record P₃₁ in figure 6f exemplifies an observant-type braking event (acceleration event type). 'Observant-type' braking may occur when a driver who is fully aware of a situation observes something unexpected happening ahead of them, such as a car suddenly pull out or a pedestrian step into the road. A steady pattern of braking may be applied in a measured way which brings the vehicle to a required reduced speed or a safe stop. The steady braking lasts for around 2.5 seconds in this example.

A block diagram of an example resultant data structure 700 of the training set discussed with regard to the impact data examples in figures 6a to 6c is illustrated in figure 7. A similar data structure may be provided for the example non-impact data described with regard to figures 6d to 6f. The training set contains three different impact event types T1, T2, T3. Each impact event type contains 10 examples (n = 10) of impact records (e.g. R₁, R₂, R_{N}). Each impact record R₁ - R₃ₙ contains 802 samples (z = 802), or data points, Zᵢ. Feature extraction, or identification is performed by applying a discrete wavelet transformation to each impact record R using a 4 level Haar wavelet. Such functions are available in standard applied mathematics packages, such as Matlab.

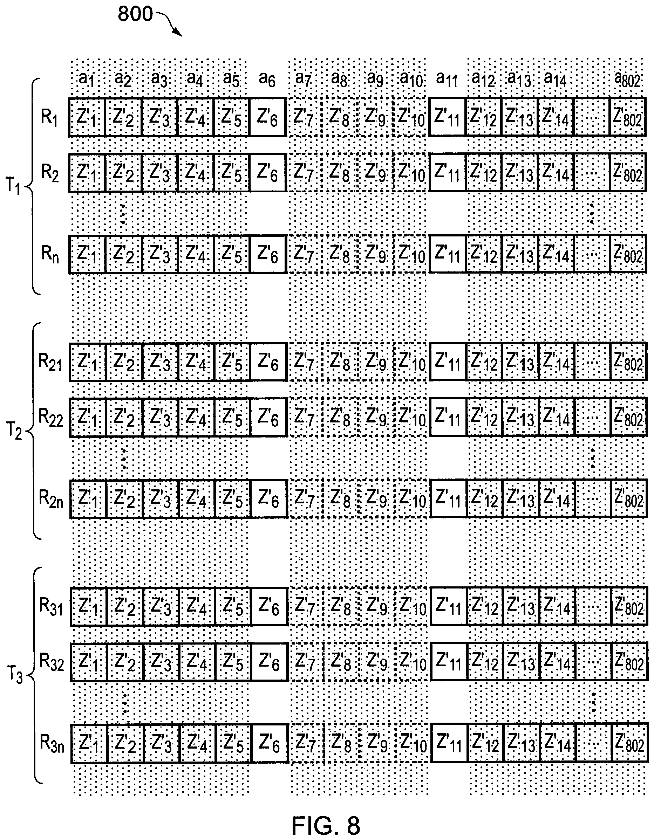

Figure 8 illustrates a table 800, or matrix, of coefficients of transformed motion sensor data. A coefficient is an example of an identified feature provided by a wavelet transformation. The transformed matrix contains *802* coefficients, a₁-a₈₀₂, one for each data point zᵢ. Each coefficient has 30 elements, one element, z'ᵢ, for each impact record, R₁-R₃ₙ. Each coefficient a₁-a₈₀₂ characterises the waveform shapes of the impact records R₁-R₃ₙ at different scales and translations. Scale relates to the frequency of the original waveform and translation contains relative, rather than absolute, temporal information about the waveform.

Indicative features of the motion sensor data are determined by selecting a number of indicative coefficients, which are an example of an indicative feature for the wavelet transformation example. Two of these indicative coefficients, a₆ and a₁₁ are highlighted in figure 8. An indicative coefficient (e.g. a₆, a₁₁) is a coefficient with elements z'ᵢ that are distinguishable from one another based on the type T of impact event to which the elements z'ᵢ relate. That is, the value of an element is indicative of a particular type of impact event. The ability of each coefficient a₁-a₈₀₂ to provide effective clustering of different types T of impact event across all of the impact records R₁-R₃ₙ, and therefore differentiate between the different types T of impact event, can be calculated using a variety of statistical methods including cluster analysis.

In this example, 20 of the 802 coefficients were selected as indicative coefficients, or indicative features, using the KMeans clustering method. These 20 coefficients (e.g. a₆-a₁₁) are those that produce the highest separation between centroids of groups of elements z' that relate to the three different types T₁-T₃ of impact event. The centroid and area of these groups can be calculated using 2 Standard Deviations to rule out outliers. These indicative coefficients a₆, a₁₁ are selected to form a subset of coefficients a₆, a₁₁.

Each of the indicative coefficients can be plotted against each other with each plot containing 30 data points representing the 30 impact records R₁-R₃ₙ within the training set.

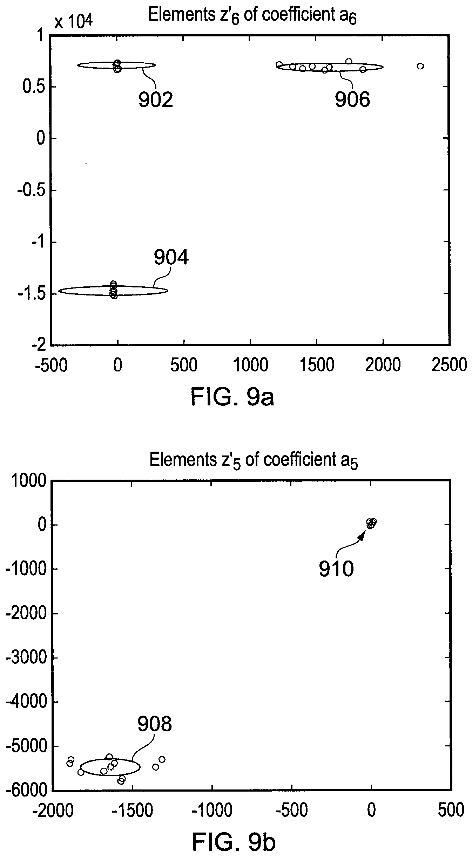

Figure 9a illustrates a plot of an indicative coefficient a₆ that enables the three different impact event types T₁-T₃ to be resolved. The data plotted in figures 9a and 9b relates to different types of impact events of a vehicle, rather than braking events, but the principle of analysis described below is not dependent on the type of motor vehicle event. The elements z'₆ of the coefficient a₆ have a scale value and a translation value. The elements z'₆ also have an amplitude, or power, associated with them, but it is not necessary in all cases to consider this amplitude when determining the clustering of coefficients. In practice the amplitude may be dependent on the location of the sensing device, hence the overall form (and thus the centroid weight) may be a simpler and more reliable value in some applications.

The elements z'₆ are segregated into three groups 902, 904, 906. Each group 902, 904, 906 is associated with a different impact event type T₁, T₂, T₃. The separation of the elements z'₆ into distinguishable groups means that this coefficient may provide templates for the known impact event types T₁, T₂, T₃.

Figure 9b illustrates, for comparison with figure 9a, a plot of a coefficient a₅ that does not enable the three different impact event types T₁-T₃ to be resolved. As in figure 9a, the elements z'₅ of the coefficient as are displayed on an axis of scale against an axis of translation. The elements z'₅ are segregated into only two groups 908, 910. The elements in a first group 908 are associated with a first type T₁ of impact event. The elements in a second group 910 are associated with either a second type T₂ or a third type T₃ of impact event. The inability to distinguish between the second type T₂ and third type T₃ of impact event means that this coefficient cannot be used to provide templates that distinguish the second type T₂ and third type T₃ of impact event.

Having determined a set of indicative coefficients a₆, a₁₁ that effectively separate the impact records R₁-R₃ₙ into discrete clusters of values related to the respective impact types, these indicative features are then stored as "learnt data", or templates, for use in a classification mode. Specifically, the centroid, or another statistical description, of each group of elements is a value that corresponds to a particular impact type. Each value is an example of a template. These templates are stored together with an identifier of the particular type of motor vehicle impact event associated with which each template, as a template library.

By providing a single labelled example of each event record R₁-R₃ₙ, a classification can easily be converted into a more reader friendly output as descriptive text strings i.e. "Full-Width Crash Front" for the impact event type T₁.

Figure 10 illustrates a portion of a template library 1000. The template library 1000 comprises each of the coefficients of figure 8 identified as being indicative of the type of impact events. Each coefficient a₆, a₁₁ is associated with a number of templates t_{1,6}-t_{3,11}. The templates correspond to the statistical description identified as corresponding to the respective types of impact event T₁, T₂, T₃. As such, each descriptor t_{1,6}-t_{3,11} is a value of the coefficient that is associated with a particular impact event type T₁, T₂, T₃. In this example, the template library also contains a label associated with each impact event type T₁, T₂, T₃. The relationships between each of the classes of data considered in relation to the wavelet transformation embodiments are described below.

**Table of relationships**

| **Class (space)** | **Description** | **Example** |
|---|---|---|
| Impact type, T (label) | A type of impact | full width front collision, T₁; front offset collision, T₂; offset rear collision, T₃ |
| Impact Record, R (label) | Relates to a specific impact event of an impact type T | R₁, R₂, Rₙ, R₂₁, R₂₂, R₂ₙ, R₃₁, R₃₂, R₃ₙ |
| Data point, z (amplitude, time) | Motion sensor data associated with an impact record R contains data points | Each of z₁-z₈₀₂ |
| element, z' (scale, translation, amplitude) | Transformed motion sensor data associated with an impact record R contains elements. Each element is associated with a coefficient a₁-a₈₀₂, which acts as an element index. | Each of z'₁-z'₈₀₂ |
| Indicative feature / Indicative coefficient (index) | Coefficients that can be used to distinguish between impact types T. Associated with elements z' that can be separated into different groups depending on the impact type T of the record R that an element z' belongs to. | a₆, a₁₁ |
| Template (scale, translation) | A value of a coefficient that is indicative of a particular impact type. Can be a descriptor of a group of elements of an indicative coefficient. | t_{1, 6}, t_{2, 6}, t_{3, 6}, t_{1, 11}, t_{2, 11}, t_{3, 11}; centroid of 902, 904, 906 |

In the classification mode, the method of figure 2 or apparatus of figure 3 is used to classify received motion sensor data using the template library 1000. The use of a discrete wavelet transformation in such a method or apparatus is discussed below.

Figure 11 illustrates a transformed impact record 1100 to be classified. Such motion sensor data is related to an unknown type of impact event and is received motion sensor data from one or more sensor 306, 308 on a motor vehicle (step 202 of method 200).

The impact record Rₛₐₘₚₗₑ is transformed into a number of coefficients (the transformed impact record 1100) using the same or similar discrete wavelet transformation function used to generate the template library. In the classification mode, there is typically only one event record Rₛₐₘₚₗₑ and so each coefficient a₁-a₈₀₂ has a single element z'₁-z'₈₀₂.

The plurality of templates are retrieved 204 from the template library 1000. The coefficients a₆, a₁₁ of the impact record 1100 that correspond to the coefficients of the templates stored in the template library 1000 are selected. In this way, features of the motion sensor data are identified. The elements z'₆, z'₁₁ of the selected coefficient a₆, a₁₁ of the impact record 1100 are compared to the templates t_{1, 6}-t_{3, 11} (at step 206). Both the elements z'_{6,} z'₁₁ and the templates t_{1, 6}-t_{3, 11} have a scale and translation associated with them because the elements are wavelet transformed values and the templates t_{1, 6}-t_{3, 11} relate to the centroid of groups of elements as discussed with reference to figures 8 to 10.

The comparison between the elements z'_{6,} z'₁₁ and templates t_{1, 6}-t_{3, 11} can be performed in a number of ways. For example, a degree of correlation between an element (e.g. z'₆) of a coefficient a₆ of the impact record 1100 and each of the templates t_{1,6}, t_{2,6}, t_{3,6} that belong to the corresponding coefficient a₆ of the template library 1000 can be generated. From this comparison it can be determined if the element z'₆ matches any of the templates t_{1,6}, t_{2,6}, t_{3,6}. That is, whether the element z'₆ fall within a sufficiently close proximity of a template in the scale and translation space. Alternatively, it can be determined which template the element z'₆ is closest to in the scale-transformation space. This process may be repeated for each of the selected coefficients z'₆, z'₁₁. The determined impact type may therefore relate to the impact type T associated with the majority of templates that match the elements z'₆, z'₁₁ of the selected coefficient a_{6,} a₁₁.

An impact type classification can be converted into a more reader friendly output as descriptive text strings. That is the label [e.g. "full width front crash"] associated with the determined impact type T₁ can be provided as an output. A degree of correlation between the matching templates and the impact record Rₛₐₘₚₗₑ, or another confidence ranking to indicate the quality of fit across the selected coefficients, can also be provided as an output.

## Claims

1. An automotive telematics apparatus (300) for discriminating between types of event on a motor vehicle, wherein the automotive telematics apparatus is provided by a computer that is remote from the motor vehicle, the computer comprising:
a template library (304) storing a plurality of different templates, each template corresponding to an event type; and
a pattern matching processor (302) configured to:
(i) receive motion sensor data from one or more motion sensors (306, 308) on the motor vehicle,
(ii) apply a wavelet transformation to the motion sensor data in order to identify features of transformed motion sensor data,
(iii) compare one or more of the identified features of the transformed motion sensor data with templates in the template library, and
(iv) determine an event type based on the comparison.

2. The automotive telematics apparatus (300) of claim 1 wherein the one or more identified features are coefficients of the transformed motion sensor data, wherein a plurality of coefficients associated with one or more templates are provided in the template library (304), and wherein the pattern matching processor (302) is configured to compare each coefficient of the transformed motion sensor data with the one or more templates of a corresponding coefficient provided in the template library.

3. The automotive telematics apparatus (300) of claim 2, wherein the pattern matching processor (302) is configured to match a scale and translation value of each of the coefficients of the transformed motion sensor data with a scale and translation value of the one or more templates of the corresponding coefficient provided in the template library (304).

4. The automotive telematics apparatus (300) of any preceding claim wherein the one or more motion sensors comprises only a single type of motion sensor.

5. The automotive telematics apparatus (300) of any preceding claim wherein the one or more motion sensors comprises only a single motion sensor.

6. The automotive telematics apparatus (300) of any preceding claim wherein the one or more motion sensors comprise an accelerometer or a three-dimensional accelerometer.

7. The automotive telematics apparatus (300) of claim 6 wherein the accelerometer is configured to be mounted in the vehicle with an axis of acceleration normal to the ground.

8. The automotive telematics apparatus (300) of any preceding claim wherein the one or more motion sensors comprise a vibration sensor.

9. The automotive telematics apparatus (300) of any preceding claim wherein the pattern matching processor (302) is configured to classify a type of vehicle behaviour based on a number of determinations of acceleration event types, the classification based on the occurrence of each type of acceleration event.

10. The automotive telematics apparatus (300) of claim 9 wherein one or more of the templates in the template library (304) are associated with a risk weighting for the corresponding event type and wherein the classification is also based on the risk weighting of each type of acceleration event.

11. The automotive telematics apparatus (300) of any preceding claim wherein one or more of the templates in the template library (304) are each associated with a type of braking event.

12. The automotive telematics apparatus (300) of any preceding claim wherein the computer is a server.

13. The automotive telematics apparatus (300) of any preceding claim wherein the motion sensor data is received from the one or more motion sensors (306, 308) on the motor vehicle during use of the motor vehicle.

14. An automotive telematics system comprising the automotive telematics apparatus of any preceding claim and a vehicle having one or more motion sensors and configured to send motion sensor data from the one or more motion sensors to the automotive telematics apparatus of any preceding claim.

15. An automated method (200) for discriminating between types of event on a motor vehicle, comprising using an automotive telematics apparatus (300) provided by a computer that is remote from the motor vehicle to:
receive motion sensor data (202) from one or more motion sensors (306, 308) on the motor vehicle;
retrieve (204) a plurality of different templates from a template library (304), each template corresponding to an event type;
apply a wavelet transformation to the motion sensor data in order to identify features of transformed motion sensor data;
compare (206) one or more of the identified features of the transformed motion sensor data with the plurality of different templates; and
determine (208) an event type based on the comparison.

16. A computer program configured to perform the method of claim 15.

## Patentansprüche

1. Kraftfahrzeugtelematikvorrichtung (300) zum Unterscheiden zwischen Ereignisarten an einem Kraftfahrzeug, wobei die Kraftfahrzeugtelematikvorrichtung durch einen von dem Kraftfahrzeug entfernten Computer bereitgestellt wird, wobei der Computer Folgendes umfasst:
eine Vorlagenbibliothek (304), in der mehrere unterschiedliche Vorlagen gespeichert sind, wobei jede Vorlage einer Ereignisart entspricht; und
einen Musterabgleichprozessor (302), der für Folgendes konfiguriert ist:
(i) Empfangen von Bewegungssensordaten von einem oder mehreren Bewegungssensoren (306, 308) an dem Kraftfahrzeug,
(ii) Vornehmen einer Wavelet-Transformation der Bewegungssensordaten, um Merkmale transformierter Bewegungssensordaten zu ermitteln,
(iii) Vergleichen eines oder mehrerer der ermittelten Merkmale der transformierten Bewegungssensordaten mit Vorlagen in der Vorlagenbibliothek und
(iv) Bestimmen einer Ereignisart basierend auf dem Vergleich.

2. Kraftfahrzeugtelematikvorrichtung (300) nach Anspruch 1, wobei das eine oder die mehreren ermittelten Merkmale Koeffizienten der transformierten Bewegungssensordaten sind, wobei mehrere Koeffizienten, die einer oder mehreren Vorlagen zugeordnet sind, in der Vorlagenbibliothek (304) bereitgestellt sind und wobei der Musterabgleichprozessor (302) dazu konfiguriert ist, jeden Koeffizienten der transformierten Bewegungssensordaten mit der einen oder den mehreren Vorlagen eines entsprechenden Koeffizienten zu vergleichen, der in der Vorlagenbibliothek bereitgestellt ist.

3. Kraftfahrzeugtelematikvorrichtung (300) nach Anspruch 2, wobei der Musterabgleichprozessor (302) dazu konfiguriert ist, einen Maßstabs- und Translationswert jedes der Koeffizienten der transformierten Bewegungssensordaten mit einem Maßstabs- und Translationswert der einen oder mehreren Vorlagen des entsprechenden Koeffizienten abzugleichen, der in der Vorlagenbibliothek (304) bereitgestellt ist.

4. Kraftfahrzeugtelematikvorrichtung (300) nach einem vorangehenden Anspruch, wobei der eine oder die mehreren Bewegungssensoren nur eine einzige Art von Bewegungssensor umfassen.

5. Kraftfahrzeugtelematikvorrichtung (300) nach einem vorangehenden Anspruch, wobei der eine oder die mehreren Bewegungssensoren nur einen einzigen Bewegungssensor umfassen.

6. Kraftfahrzeugtelematikvorrichtung (300) nach einem vorangehenden Anspruch, wobei der eine oder die mehreren Bewegungssensoren einen Beschleunigungsmesser oder einen dreidimensionalen Beschleunigungsmesser umfassen.

7. Kraftfahrzeugtelematikvorrichtung (300) nach Anspruch 6, wobei der Beschleunigungsmesser dazu konfiguriert ist, mit einer Beschleunigungsachse senkrecht zum Boden in dem Fahrzeug gelagert zu werden.

8. Kraftfahrzeugtelematikvorrichtung (300) nach einem vorangehenden Anspruch, wobei der eine oder die mehreren Bewegungssensoren einen Vibrationssensor umfassen.

9. Kraftfahrzeugtelematikvorrichtung (300) nach einem vorangehenden Anspruch, wobei der Musterabgleichprozessor (302) dazu konfiguriert ist, basierend auf einer Anzahl von Bestimmungen von Beschleunigungsereignisarten eine Art von Fahrzeugverhalten zu klassifizieren, wobei die Klassifizierung auf dem Vorkommen jeder Art von Beschleunigungsereignis basiert.

10. Kraftfahrzeugtelematikvorrichtung (300) nach Anspruch 9, wobei eine oder mehrere der Vorlagen in der Vorlagenbibliothek (304) einer Risikogewichtung für die entsprechende Ereignisart zugeordnet ist/sind und wobei die Klassifizierung auch auf der Risikogewichtung jeder Art von Beschleunigungsereignis basiert.

11. Kraftfahrzeugtelematikvorrichtung (300) nach einem vorangehenden Anspruch, wobei eine oder mehrere der Vorlagen in der Vorlagenbibliothek (304) jeweils einer Art von Bremsereignis zugeordnet ist/sind.

12. Kraftfahrzeugtelematikvorrichtung (300) nach einem vorangehenden Anspruch, wobei der Computer ein Server ist.

13. Kraftfahrzeugtelematikvorrichtung (300) nach einem vorangehenden Anspruch, wobei die Bewegungssensordaten von dem einen oder den mehreren Bewegungssensoren (306, 308) an dem Kraftfahrzeug während der Verwendung des Kraftfahrzeugs empfangen werden.

14. Kraftfahrzeugtelematiksystem, das die Kraftfahrzeugtelematikvorrichtung nach einem vorangehenden Anspruch und ein Fahrzeug mit einem oder mehreren Bewegungssensoren umfasst und dazu konfiguriert ist, Bewegungssensordaten von dem einen oder den mehreren Bewegungssensoren an die Kraftfahrzeugtelematikvorrichtung nach einem vorangehenden Anspruch zu senden.

15. Automatisiertes Verfahren (200) zum Unterscheiden zwischen Ereignisarten an einem Kraftfahrzeug, das umfasst, eine Kraftfahrzeugtelematikvorrichtung (300), die durch einen von dem Kraftfahrzeug entfernten Computer bereitgestellt wird, für Folgendes zu verwenden:
Empfangen von Bewegungssensordaten (202) von einem oder mehreren Bewegungssensoren (306, 308) an dem Kraftfahrzeug;
Abrufen (204) mehrerer unterschiedlicher Vorlagen aus einer Vorlagenbibliothek (304), wobei jede Vorlage einer Ereignisart entspricht;
Vornehmen einer Wavelet-Transformation der Bewegungssensordaten, um Merkmale transformierter Bewegungssensordaten zu ermitteln;
Vergleichen (206) eines oder mehrerer der ermittelten Merkmale der transformierten Bewegungssensordaten mit den mehreren unterschiedlichen Vorlagen; und
Bestimmen (208) einer Ereignisart basierend auf dem Vergleich.

16. Computerprogramm, das dazu konfiguriert ist, das Verfahren nach Anspruch 15 auszuführen.

## Revendications

1. Appareil télématique pour véhicule (300) permettant d'établir la distinction entre les types d'événements subis par un véhicule automobile, dans lequel l'appareil télématique pour véhicule est alimenté par un ordinateur distant du véhicule automobile, l'ordinateur comprenant :
une bibliothèque de modèles (304) stockant une pluralité de modèles différents, chaque modèle correspondant à un type d'événement ; et
un processeur de mise en correspondance de formes (302) configuré pour :
(i) recevoir des données de capteur de mouvement d'un ou de plusieurs capteurs de mouvement (306, 308) installés sur le véhicule automobile,
(ii) appliquer une transformation en ondelettes aux données de capteur de mouvement afin d'identifier les caractéristiques des données de capteur de mouvement transformées,
(iii) comparer une ou plusieurs caractéristiques identifiées des données de capteur de mouvement transformées avec les modèles disponibles dans la bibliothèque de modèles, et
(iv) déterminer un type d'événement sur la base de la comparaison.

2. Appareil télématique pour véhicule (300) selon la revendication 1, dans lequel la ou les caractéristiques identifiées sont des coefficients des données de capteur de mouvement transformées, dans lequel une pluralité de coefficients associés à un ou plusieurs modèles est disponible dans la bibliothèque de modèles (304), et dans lequel le processeur de mise en correspondance de formes (302) est configuré pour comparer chaque coefficient des données de capteur de mouvement transformées avec le ou les modèles d'un coefficient correspondant disponible dans la bibliothèque de modèles.

3. Appareil télématique pour véhicule (300) selon la revendication 2, dans lequel le processeur de mise en correspondance de formes (302) est configuré pour faire correspondre une échelle et une valeur de translation de chacun des coefficients des données de capteur de mouvement transformées avec une échelle et une valeur de translation du ou des modèles du coefficient correspondant disponibles dans la bibliothèque de modèles (304).

4. Appareil télématique pour véhicule (300) selon l'une des revendications précédentes, dans lequel le ou les capteurs de mouvement ne comprennent qu'un seul type de capteur de mouvement.

5. Appareil télématique pour véhicule (300) selon l'une des revendications précédentes, dans lequel le ou les capteurs de mouvement ne comprennent qu'un seul capteur de mouvement.

6. Appareil télématique pour véhicule (300) selon l'une des revendications précédentes, dans lequel le ou les capteurs de mouvement comprennent un accéléromètre ou un accéléromètre tridimensionnel.

7. Appareil télématique pour véhicule (300) selon la revendication 6, dans lequel l'accéléromètre est configuré pour être monté dans le véhicule avec un axe d'accélération normal au sol.

8. Appareil télématique pour véhicule (300) selon l'une des revendications précédentes, dans lequel le ou les capteurs de mouvement comprennent un capteur de vibration.

9. Appareil télématique pour véhicule (300) selon l'une des revendications précédentes, dans lequel le processeur de mise en correspondance de formes (302) est configuré pour classer un type de comportement de véhicule sur la base d'un certain nombre de déterminations de types d'événements d'accélération, la classification étant basée sur la survenue de chaque type d'événement d'accélération.

10. Appareil télématique pour véhicule (300) selon la revendication 9, dans lequel un ou plusieurs des modèles de la bibliothèque de modèles (304) est/sont associé(s) à une pondération de risque pour le type d'événement correspondant et dans lequel la classification est également basée sur la pondération de risque de chaque type d'événement d'accélération.

11. Appareil télématique pour véhicule (300) selon l'une des revendications précédentes, dans lequel un ou plusieurs des modèles de la bibliothèque de modèles (304) est/sont associé(s) à un type d'événement de freinage.

12. Appareil télématique pour véhicule (300) selon l'une des revendications précédentes, dans lequel l'ordinateur est un serveur.

13. Appareil télématique pour véhicule (300) selon l'une des revendications précédentes, dans lequel les données de capteur de mouvement sont reçues d'un ou de plusieurs capteurs de mouvement (306, 308) installés sur le véhicule automobile pendant son utilisation.

14. Système télématique pour véhicule comprenant l'appareil télématique pour véhicule selon l'une des revendications précédentes et un véhicule comportant un ou plusieurs capteurs de mouvement et configuré pour envoyer des données de capteur de mouvement d'un ou de plusieurs capteurs de mouvement à l'appareil télématique pour véhicule selon l'une des revendications précédentes.

15. Procédé automatisé (200) permettant d'établir la distinction entre les types d'événements subis par un véhicule automobile, comprenant l'utilisation d'un appareil télématique pour véhicule (300) alimenté par un ordinateur distant du véhicule automobile afin de :
recevoir des données de capteur de mouvement (202) provenant d'un ou de plusieurs capteurs de mouvement (306, 308) installés sur le véhicule automobile ;
récupérer (204) une pluralité de modèles différents à partir d'une bibliothèque de modèles (304), chaque modèle correspondant à un type d'événement ;
appliquer une transformation en ondelettes aux données de capteur de mouvement afin d'identifier les caractéristiques des données de capteur de mouvement transformées ;
comparer (206) une ou plusieurs des caractéristiques identifiées des données de capteur de mouvement transformées avec la pluralité de modèles différents ; et
déterminer (208) un type d'événement sur la base de la comparaison.

16. Programme informatique conçu pour exécuter le procédé selon la revendication 15.
